# EUROPEAN PATENT APPLICATION

(11) **EP 4 686 774 A1**
(43) Date of publication of application: **04.02.2026**
(21) Application number: 24315366.5
(22) Date of filing: 30.07.2024
(51) Int. Cl.: C25B 1/04, C25B 9/60, C25B 9/75, C25B 9/77, C25B 15/08

(54) **THIN CELL FRAME FOR A HYDROGEN ELECTROLYZER, STACK OF SUCH CELL FRAME, AND ELECTROLYZER COMPRISING SUCH STACK**

(71) Applicant: John Cockerill Hydrogen France, 68700 Aspach-Michelbach (FR)
(72) Inventor: Walter, Tobias, 38100 GRENOBLE (FR)
(74) Representative: IP Trust

(57) **Abstract**

A frame assembly (Fr.Ass) comprising a frame (TF) configured to be integrated in a stack of frames of an electrolyzer, the frame comprising a central opening (CentOp), a first through opening (In₂ , Out₂ ), a top surface (Top) and a bottom surface (Bot) opposed to the top surface (Top), the frame further comprising an open channel (OpCh) on the bottom surface (Bot), the frame assembly comprising a bipolar plate (BP) formed from a polymer material, the bipolar plate being arranged so as to seal the open channel (OpChan), the bipolar plate being welded to the frame (TF).

## Description

### FIELD OF THE INVENTION

The technical domain of the invention is that of an apparatus designed to perform alkaline water electrolysis for the production of hydrogen, and more specifically that of a frame designed to bring lye to electrolysis cells of an electrolyzer.

### BACKGROUND OF THE INVENTION

Hydrogen (H₂) is an energy vector that is gathering a lot of attention due to its potential to be produced in an environment-friendly manner and to support the emergence of low-carbon emission industrial processes and transportation means.

As for hydrogen production, electrochemical water splitting is a well-known approach that is sustainable and pollution-free.

This approach can be implemented by alkaline water electrolysis, in which electrolysis of water H₂O is performed by flowing a direct current of electrons between an anode An and a cathode Ca immersed in an aqueous alkaline electrolyte.

At the cathode, electrons provided by the direct current react with water to produce hydrogen gas and hydroxide ions according to the reaction:

2*H*₂*O* + 2*e⁻* → 2*H*₂ + 2*OH*⁻

At the anode, the hydroxide ions release their electrons in excess to produce water and oxygen gas according to the reaction:

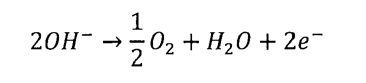

These electrodes are separated by a thin porous foil commonly referred to as a diaphragm, that is a separator nonconductive to electrons, separating the product gases and letting hydroxide ions (OH⁻) pass from the cathode side to the anode side. The diaphragm separates the electrolysis cell into two half-cells.

Ionic conductivity is supplied by the aqueous alkaline electrolyte, usually an aqueous solution of potassium hydroxide (KOH) or sodium hydroxide (NaOH). In a conventional implementation of alkaline hydrolysis, two fluidic circuits separated by the diaphragm are employed, one comprising the anode An and the other one comprising the cathode Ca. The electrolyte bathing the anode is designated as "anolyte" (A-lyte in the figure), and the electrolyte bathing the cathode is designated as "catholyte" (C-lyte in the figure). It is preferable to prevent mixing between the anolyte and the catholyte to keep the product gases O₂ and H₂ as pure as possible.

The mix comprising the anolyte A-lyte and generated oxygen gas O₂ is pumped out of the cell and goes through a first gas-liquid separator Sep-Oz where the oxygen gas O₂ is separated from the anolyte. The oxygen gas is then retrieved separately and the anolyte sent into an anolyte tank before being circulated again through the tank of the cell.

Symmetrically, the mix comprising the catholyte C-lyte and generated hydrogen gas H₂ is pumped out of the cell and goes through a second gas-liquid separator Sep-H₂ where the hydrogen gas H₂ is separated from the catholyte C-lyte. The hydrogen gas is then retrieved separately and the catholyte sent into a catholyte tank before being circulated again through the tank of the cell.

For a production of hydrogen at an industrial scale, electrolyzers are employed, that comprise stacks that can be made of several hundreds of electrolytic cells formed by frames holding the components to form a functional stack: diaphragms, bipolar plates, anodes and cathodes.

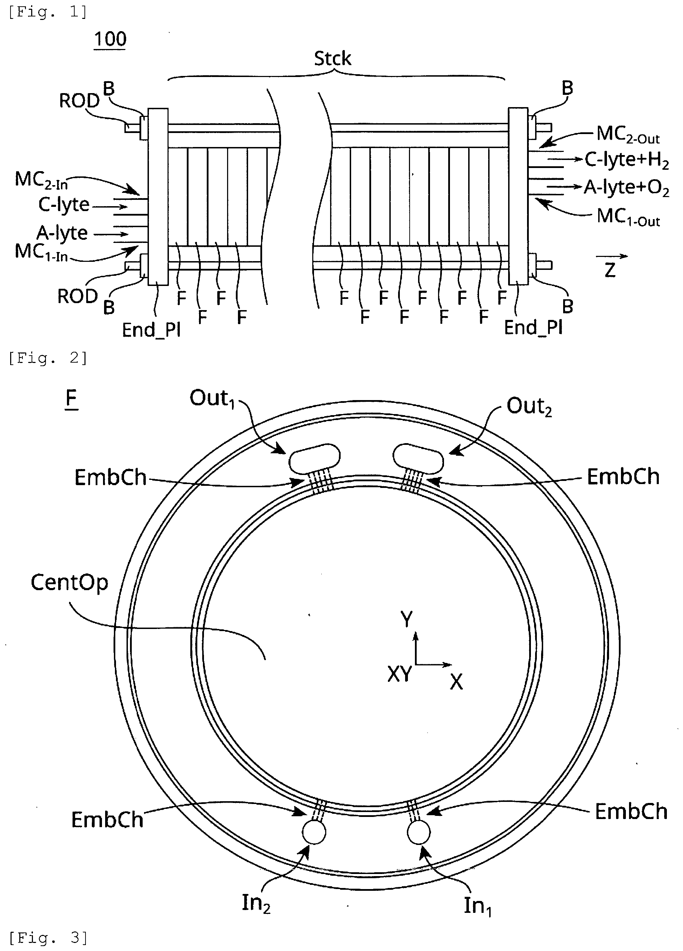

Figure 1 illustrate an electrolyzer 100 integrating a stack Stck made of a plurality of frames F. The frames are stacked according to a direction Z so that their respective inlets and outlets coincide, and are sandwiched by two end plates End_Pl clamped by a plurality bolts B mounted onto threaded rods ROD. The aligned inlets and outlets of each frames form main channels having inlets and outlets MC_{1-In}, MC_{1-Out}, MC_{2-In} and MC_{2-Out}. Inlets MC_{1-In} and MC_{2-In} are to be input with the anolyte A-lyte and the catholyte C-lyte, respectively, while the outlet MC_{1-Out} is to output the anolyte A-lyte and oxygen gas O₂ and the outlet MCZ_{2-Out} is to output the catholyte C-lyte and hydrogen gas H₂. Although not represented on Figure 1, negative and positive current collectors can be placed on respective sides of the stack Stck for electrically connecting the stack to the outside. Alternatively, one side of the stack can be connected to the negative current collector and the other side to the ground. In the latter case, fluids are introduced on the grounded side.

In the example of this figure 1, the anolyte and catholyte are introduced on one side of the stack Stck, at the level of a first end plate End_pl. The anolyte A-lyte and oxygen gas O₂ and the catholyte C-lyte and hydrogen gas H are evacuated at the opposing side of the stack Stck, at the level of the second opposing end plate End_pl. In a variation of the electrolyzer 100 represented on figure 1, the anolyte and catholyte may be introduced and evacuated on the same side of the stack, at the level of a same end plate End_pl. In this configuration, the opposite end plate or any interposed device is configured to fluidly connects the inlets main channels of the last cell to the output main channel of this cell. In this configuration, the end plate is electrically grounded.

Patent document WO 2006/112919 A2 describes assemblies to form stacks of cells, with single-piece electrically nonconductive frames that support said components and define flow paths for working fluids and for products of ionic exchange.

Patent document US 2010/0187102 A1 describes cell frames comprising through openings meant to form inlets and outlet channels of a stack of cell frames, with radial openings within the thickness of the frames for the circulation of fluids between the through openings and the active, central areas of the cells.

Figure 2 illustrates such a conventional frame, with a circular shape extending in an extension plane XY of the frame, defined by directions X and Y. The extension plane is normal to the direction Z corresponding to the extension direction of an electrolyzer in which the frames are to be integrated to form a stack of frames. The frame defines a closed inner central opening CentOp and four through openings, designated in correspondence to the inlets and outlets of the hydrolyzer of Figure 1: In₁, Out₁, In₂, Outz.

Indeed, the through openings are meant to form main channels having inlets MC_{1-In} and MC_{2-In} and outlets MC_{1-Out} and MC_{2-Out} when a plurality of identical frames are stacked. Throughout this document, the through openings meant to form the main channels are designed as the corresponding in lets or outlets of the main channels: through openings In₁, In₂, Out₁ and Out₂ for main channels having inlets MC_{1-In} and MC_{2-In} and outlets MC_{1-Out} and MC_{2-Out}, respectively. Embedded channels EmbCh formed within the thickness of the frames are to ensure fluidic communication between the inner central opening CentOp and each of the through openings In₁, In₂, Out₁ and Out₂.

The central opening is intended to form the active region of the electrolyzer, by receiving elements such as electrodes, a bipolar plate and a diaphragm, defining an electrolytic cell.

The radial opening are identified as embedded channels EmbCh in Figure 2. In order for these radial openings to withstand the pressure applied onto the frame to guarantee a proper sealing of the electrolyzer, a certain thickness of material has to be kept on both sides of these openings in the Z direction.

On the other hand, thinner frames are needed to reduce the space requirement of a stack, especially in its length direction Z, and to reduce the amount of material required to form a stack, and thus reduce its cost.

### OBJECT OF THE INVENTION

In view of the issues above, the applicant proposes a geometry for cell frames meant to be stacked in a hydrolyzer. The proposed geometry allows to ensure mechanical robustness of the frames, preventing collapse of the frames under pressure, especially at the embedded channel, while efficiently reducing the space requirement of a stack by reducing the space required in the stacking direction for each individual frame when integrated within a stack.

### SUMMARY OF THE INVENTION

An aspect of the invention relates to a cell frame configured to be integrated in a stack of frames of an electrolyzer, the frame comprising a central opening, a first through opening, a top surface and a bottom surface opposed to the top surface, the frame further comprising: a protrusion protruding from the top surface and surrounding the first through opening; a recess formed in the bottom surface; a top channel extending through the protrusion from the first through opening towards the central opening; an open channel formed underneath the top embedded channels on the bottom surface, wherein the frame is configured so that a first reproduction of the frame can be stacked onto a second reproduction of the frame, the recess of the reproduction at the top receiving the protrusion of the reproduction at the bottom so that the first through opening is fluidically connected to the central opening through the top channel of the reproduction at the bottom and the open channel of the reproduction at the top.

A first advantage of this device is to minimize the thickness of a cell frame, while ensuring its mechanical robustness.

A second advantage is to reduce the types and number of components necessary to form a stack: only one single-piece frame is sufficient to maintain both of the diaphragm and the bipolar plate associated to an electrolytic cell. This facilitates the mounting and the maintenance of a stack.

According to further non-imitative features of the first aspect of the invention, either taken alone or in any technically feasible combination:
- the frame can be configured so that, when the first reproduction is stacked onto the second reproduction, the top channel of the reproduction at the bottom is aligned with the open channel of the reproduction at the top;
- the frame can be configured so that, when the first reproduction is stacked onto the second reproduction, a sealing element surrounding the first through opening is located in the recess of the first reproduction;
- a groove apt at receiving the sealing element can be formed in the recess;
- the open channel can have a first depth in a first region of the open channel at a side of the first through opening and a second depth in a second region of the open channel at a side of the central opening;
- the open channel can comprise an intermediary region linking the first region to the second region, the intermediary region having a depth varying continuously between the first depth and the second depth;
- the intermediary region can present a curved shape modulating the depth of the open channel and comprising a concave portion connected to the first region and a convex portion connected to the second region;
- the open channel can comprise an elongated pillar having a shape elongated along a direction of an expected flow in the open channel;
- the frame can further comprise a second through opening and an embedded channel connecting the second through opening to the central opening;
- the frame can be formed from one single piece of material.

A second aspect of the invention relates to a stack of reproductions of the frame according to the invention, the stack comprising at least a first reproduction of the frame stacked on a second reproduction of the frame, a diaphragm, a bipolar plate, a cathode, and an anode.

According to further non-imitative features of the second aspect of the invention, either taken alone or in any technically feasible combination:
- the frame can comprise a narrowing part having a top surface and a bottom surface each receiving one of the bipolar plate and the diaphragm;
- the bipolar plates can be curved so as to compensate for a discrepancy between a first distance separating a bipolar plate and a diaphragm each attached to the first reproduction and a second distance separating the bipolar plate of the first reproduction and a diaphragm from the second reproduction.

A third aspect of the invention relates to a an electrolyzer comprising the stack according to the invention, configured to circulate one of an anolyte and a catholyte through an inlet of a first main channel formed by first through openings of the first reproduction of the frame and to circulate the other one of the anolyte and the catholyte through an inlet of a second main channel formed by second through opening of the second reproduction of the frame.

An advantage of such an electrolyzer is an improvement of hydrogen production for a given spatial footprint, the latter being reduced compared to a conventional electrolyzer using thicker cell frames.

### FIGURES

Many other features and advantages of the present invention will become apparent from reading the following detailed description, when considered in conjunction with the accompanying drawings, in which:
- Figure 1 illustrates an electrolyzer;
- Figure 2 illustrates a geometry of cell frames integrated in the electrolyzer of Figure 1, in a plan view;
- Figure 3 illustrates a geometry of a cell frame compatible with the plan view of Fig. 2, in a perspective view ;
- Figure 4 illustrates fluid flows in a stack of frames each having the geometry illustrated by Fig. 3;
- Figure 5 illustrates plan top and bottom views of a frame comprising closed channels and half-open channels;
- Figure 6 illustrates schematic cross-section views along axes AA', BB' and CC' defined in Fig. 5, for a single frame and for a stack of frames identical to that illustrated by Fig. 5;
- Figure 7 illustrates schematic cross-section views along axis AA" defined in Fig. 5, for a single frame and for a stack of identical frames;
- Figure 8 illustrates schematic cross-section views along axis BB" defined in Fig. 5, for a single frame and for a stack of identical frames;
- Figure 9 illustrates schematic cross-section views along axis CC" defined in Fig. 5, for a single frame and for a stack of identical frames;
- Figure 10 illustrates a cross-section view in perspective of the through opening illustrated by Fig. 9;
- Figure 11 illustrates perspective views of a top part and a bottom part of the frame ofFig. 5, and more specifically at a through opening region;
- Figure 12 illustrates elements integrated in stacked electrolytic cell, maintained by (not illustrated) cell frames.

### DETAILED DESCRIPTION OF A SPECIFIC EMBODIMENT OF THE INVENTION

The present invention is described hereunder with the help of figures 1 and 3 to 12. For the sake of readability of the figures, some elements are represented on some of the figures only. Also, elements represented on the figures are not on scale, for a better readability.

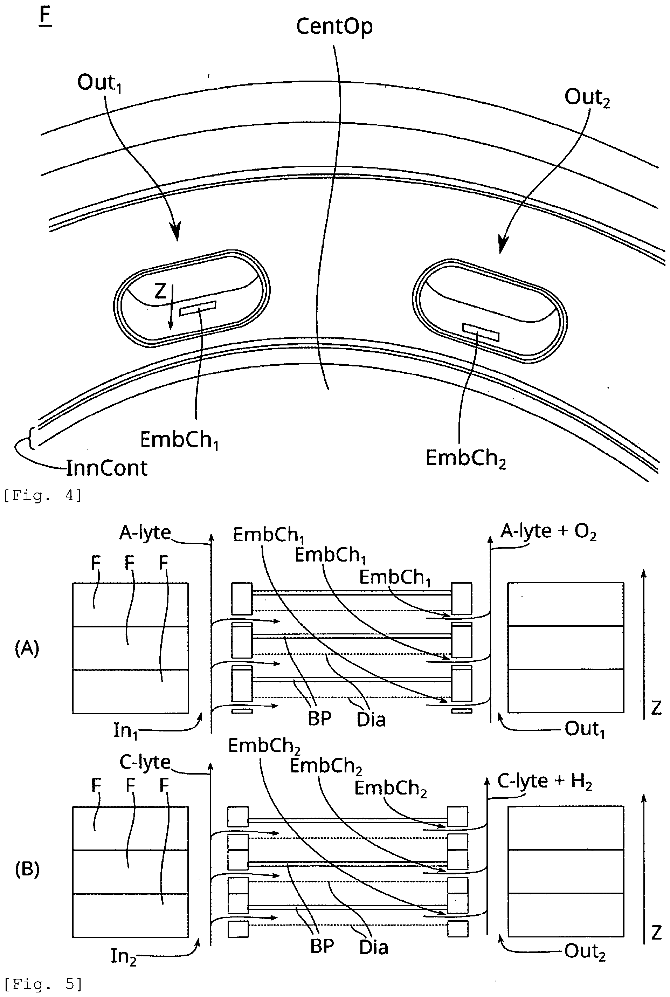

Figure 3 represents a cell frame F, called frame F in the following, arranged to distribute fluids at different levels through its thickness (i.e. different levels along direction Z), and thus able to simplify the mounting of a stack of an electrolyzer and reduce the number of elements to be stacked. The frame F of Figure 3 may have a same plan view as the frame F of Figure 2, and represents in particular the outlet side of the frame, with the through opening Out₁ and Out₂. Embedded channels EmbCh₁ and EmbCh₂ are formed within the thickness of the frame to ensure fluidic communication between the inner central opening CentOp and the through openings Out₁ and Out₂, respectively.

The specificity of the frame F of Figure 3 lies in the repartition of embedded channels EmbCh₁ and EmbCh₂ in the thickness of the frame: they are located at different height in the thickness of the frame. Figure 4, that illustrates a stack of three frames F illustrates an advantage of this geometry.

Figure 4 illustrates that embedded channels formed within the thickness of the frame to ensure fluidic communication between the inner central opening CentOp and the through openings In₁ are located at the same height as the embedded channels EmbCh₁. Figure 4 also illustrates that embedded channels formed within the thickness of the frame to ensure fluidic communication between the inner central opening CentOp and the through openings In₂ are located at the same height as the embedded channels EmbCh₂.

The frame is designed to receive a diaphragm Dia at a height intermediary to that of the embedded channels EmbCh₁ and that of the embedded channels EmbCh₂, as illustrated in Figure 4. Further, the frame is also designed to receive a bipolar plate BP at a height greater than that of the highest among the embedded channels EmbCh₁ and the embedded channels EmbCh₂.

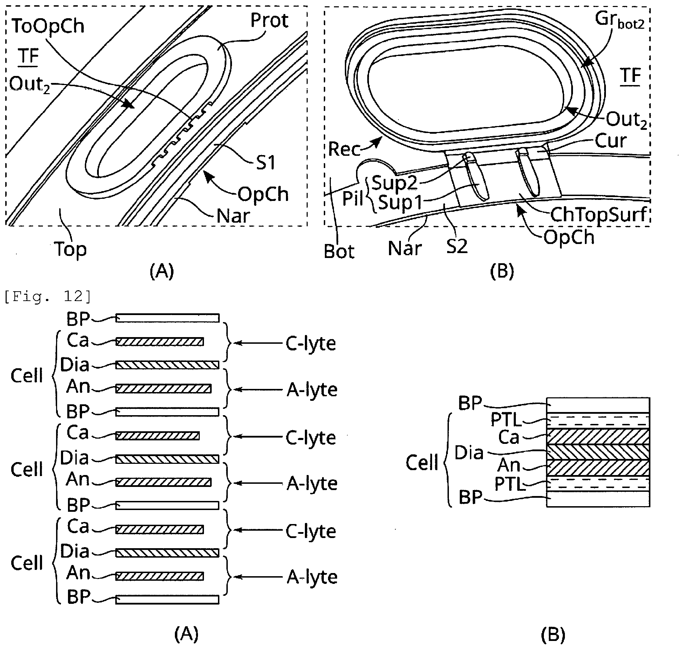

This geometry allows to simply create conventional stacked electrolytic cells Cell, whose elements and principle of constitution are illustrated by Figure 12.

Figure 12(A) illustrates that stacks of electrolytic cells Cell are conventionally formed between two bipolar plates BP, and comprise, an anode An, a cathode Ca, and a diaphragm Dia interposed between the anode and the cathode, in the same order for each of the electrolytic cells. For any given cell, the anolyte A-lyte circulates on the anode side of the cell, contained between the diaphragm and the next bipolar plate below the considered cell. Similarly, the catholyte C-lyte circulates on the cathode side of the cell, contained between the diaphragm and the next bipolar plate above the considered cell. Figure 12 (B) illustrates that porous transportation layers PTL are usually interposed between the bipolar plates and each of the cathode and the anode.

Although anodes and cathodes, catalysts thereof) or porous transportation layers are not shown in the figures 1 to 11 for the sake of clarity, it should be understood that each of the bipolar plates is associated to an anode and a cathode and interposed therebetween, as conventionally known, optionally with other components meant to improve the functioning of the catalyzer. The bipolar plates can be made of an electrically conductive material, usually a metal such as C-steel coated with nickel or pure nickel sheets to transfer electrons between the anode and the cathode. However, the bipolar plate may be made from an electrically insulating material integrating electrically conductive elements to ensure the transmission of the electrons from one side of the bipolar plate to the other.

In the frame of Figure 3, the electrodes and the porous transportation layers are circular-shaped and have a radius designed so that they can be pushed by force in the central opening CentOp and held in place by the inner contour InnCont. Still, they could also be fixed by means of screws, clamps, or other fixation means.

Back to Figure 4, we see that, for any given frame, first embedded channels distribute and evacuate the anolyte A-lyte below the diaphragm and second embedded channels distribute and evacuate the catholyte C-lyte over the diaphragm, thereby forming fluidic paths appropriate to form functional electrolytic cells of an electrolyzer. An electrolytic cell is comprised between two bipolar plates and are formed by two half electrolytic cells separated by a diaphragm.

The frame F illustrated by Figure 3 and Figure 4 is already an efficient one, with a single type of frame allowing to form stacks of electrolytic cells. However, having embedded channels at different heights within the thickness of the frame makes it difficult to reduce its thickness: to maintain a sufficient mechanical strength and prevent a collapse of the embedded channels when pressure is applied to seal the cells, a certain thickness of material has to be kept both below and over the embedded channels (when the direction Z represent the vertical axis).

### Raised portion and open channel

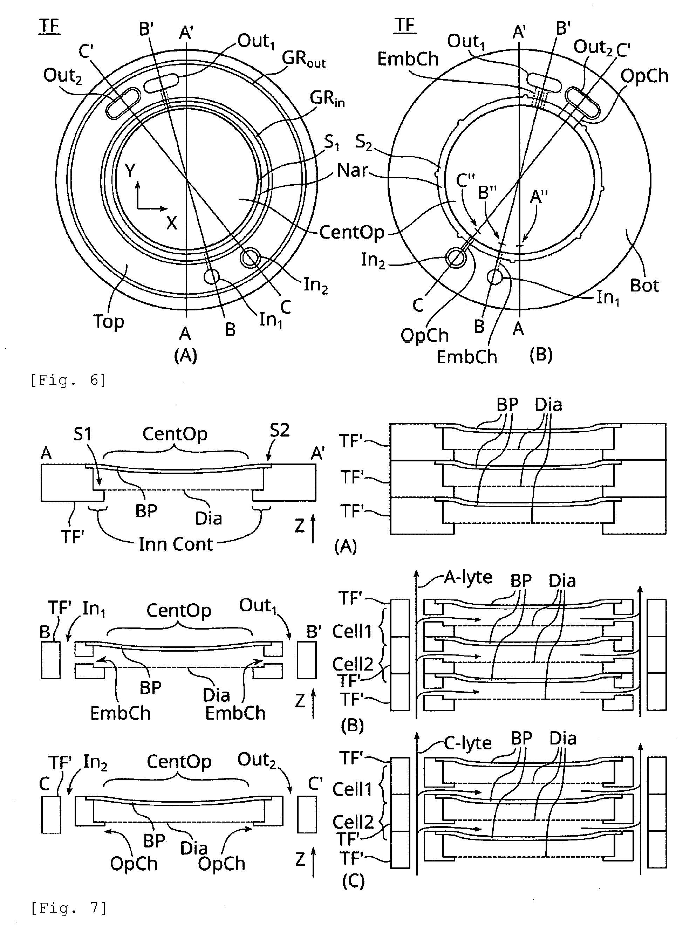

Figures 5 to 11 illustrates a geometry of thin cell frame TF, called thin frame or simply frame in the following, that allows reducing the space required for each individual frame when integrated within a hydrolyzer, and thus reducing the space occupied by this hydrolyzer for a constant number of cell in its stack.

Elements ofFigures 5 to 11 that are designated by same identifiers as elements mentioned in figures 1 to 4 have the same respective functions.

Figure 5(A) illustrates a top view of the thin frame TF extending in a plane XY defined by directions X and Y, and normal to the direction Z. It can also be said that the thin frame TF defines the extension plane XY that is the plane in which its greater dimension, its outer diameter here, can be measured.

The thin frame TF comprises an inner central opening CentOp, through openings In₁, In₂, Out₁ and Out₂, top surface Top, narrowing part Nar and its top surface S1, and grooves GRᵢₙ GRₒᵤₜ. Grooves GRᵢₙ and GRₒᵤₜ are designed to receive o-rings for the sealing between two consecutive frames in a stack of frames. Not represented additional grooves may be formed around openings In₂ and Outz, designed to receive o-rings for the sealing of the main channels between two consecutive frames.

Figure 5(B) illustrates a bottom view of the thin frame TF. The thin frame TF comprises a bottom surface Bot, and the narrowing part Nar with its bottom surface S2. Also visible are two open channels OpCh, that are formed as recesses at the bottom surface Bot so as to connect the central opening CentOp to the through opening In₂ and Out₂, respectively.

Figures 5(A) and (B) illustrates embedded channels as dotted lines. These channels are formed within the thickness of the frame TF and thus are not directly visible in plan views. They connect the central opening CentOp to the through opening In₁ and Out₁.

Figure 6 illustrates the principle of functioning of an electrolyzer comprising a stack made of the thin frame TF' combining embedded channels and open channels. More specifically, Figure 6 shows cross-sections of a thin frame TF' and a stack of three such frames. The cross-section of TF and TF' are different, but it is convenient to refer to Figure 5 to visualize the localization of the cross-sections considered in Figure 6.

Figure 6(A) shows cross-sections along axis AA' indicated in Figure 5 for the thin frame TF (no through opening present). A diaphragm Dia and a bipolar plate BP are disposed at two different heights in the thickness of each thin frame TF', so as to extend in the central opening CentOp. Notably, one of the diaphragm and the bipolar plate is situated either at the top or at the bottom of the frame. In this explanatory example, the bipolar plate is situated at the top of the frame. This cross-section does not show any channel leading to the central opening.

Figure 6(B) shows cross-sections along axis BB' indicated in Figure 5 (through openings In₁ and Out₁ visible). For any given thin frame TF', embedded channels are visible, extending radially from the central opening CentOp and fluidically connecting the through openings In₁ and Out₁ to a volume of the central opening CentOp enclosed between the diaphragm Dia and the bipolar plate BP. To this end, the embedded channels EmbCh are situated at a height intermediary between shoulders defining surfaces S1 and S2 of the inner contour of the central opening, that face the Z direction and are designed to receive the diaphragm and the bipolar plate, respectively.

When an electrolytic cell is defined as the space between two consecutive bipolar plates in a stack, then the volume of the central opening CentOp enclosed between the diaphragm Dia and the bipolar plate BP fixed on a given thin frame forms a first half electrolytic cell. The second half of the electrolytic cell is defined by the volume separating the diaphragm of this given thin frame and the bipolar plate of the thin frame on which the given thin frame is stacked. See for example Cell1 and Cell2.

Figure 6(C) shows cross-sections along axis CC' indicated in Figure 5 (through openings In₂ and Out₂ visible). For any given thin frame TF', open channels OpCh are visible, extending radially around the central opening CentOp and fluidically connecting the through openings In₂ and Out₂ to a volume of the central opening CentOp enclosed between the bipolar plate BP of the given thin frame and the diaphragm of the thin frame stacked on the given thin frame. The open channels are obviously not embedded, and rely on an adjacent thin frame to guide a fluid, the catholyte in this example, towards its intended destination.

In this fashion, the first half electrolytic cells of the stack are bathed with the anolyte A-lyte fed via the through opening In₁ and evacuated with produced oxygen O₂ via the through opening Out₁. Conversely, the second half electrolytic cells of the stack are bathed with the catholyte C-lyte fed via the through opening In₂ and evacuated with produced hydrogen H₂ via the through opening Outz.

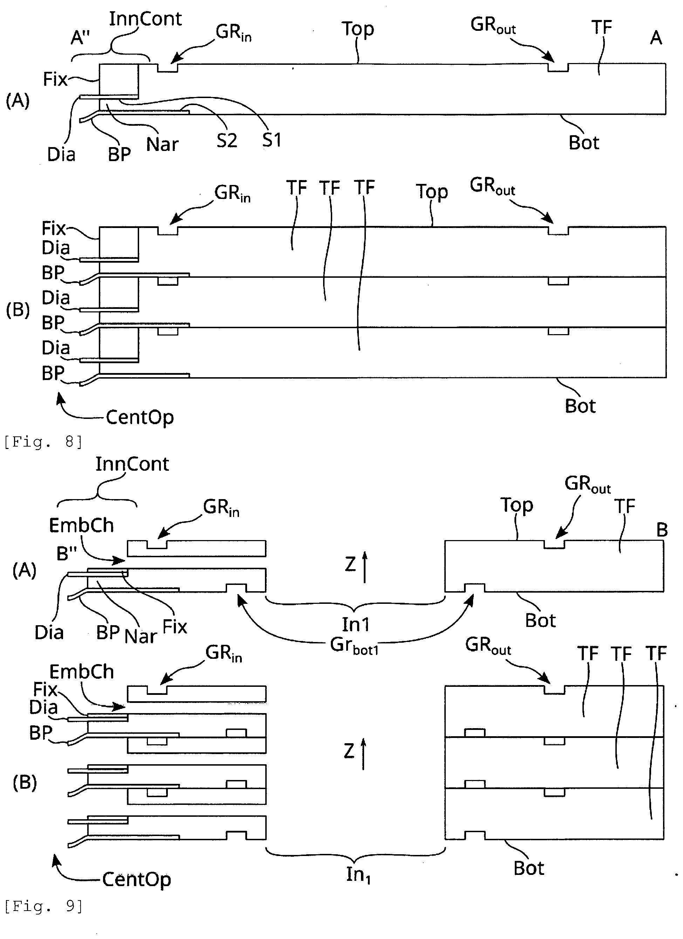

Notably, this circulation of fluid does not require two levels of embedded channels in the thickness of the thin frame, since the open channels OpCh are formed at the surface of the frame. This characteristic mechanically reduces the minimum thickness of the frame. However, there is a need to secure a good sealing around the through openings associated to the open channels. Conventional sealing elements such as o-rings disposed around through openings In₂ or Out₂ (see for example the geometry of the groove Gr_{bot1} in Figure 8) would at least partially obstruct the open channels.

Figures 7 to 11 show practical geometries of a thin frame TF that employs the principle of fluid distribution detailed illustrated by Figure 6, and thus benefits from the thinning effect of making use of open channels, but additionally circumvents the difficulty of efficiently sealing the through openings In₂ and Out₂ in each thin frame TF.

Figures 7, 8 and 9 are cross-section views defined by axes AA", BB" and CC" defined in Figure 5, illustrating regions of a thin frame TF encompassing the inner contour InnCont of the central opening CentOp, and the through openings where relevant. These cross-section views also show a fixation element Fix configured to press the diaphragm Dia against the top surface S1 of the narrowing part Nar. The diaphragm and the fixation element can be fixed to the frame by pins, screws, or any otherwise known fixation means.

Figure 7 of frame TF corresponds to Figure 6(A) of frame TF. However, surfaces S1 and S2 that receive the diaphragm Dia and the bipolar plate BP, respectively, are respectively formed on the top and the bottom of the narrowing part Nar described in relation with Figure 5.

Figure 8 of frame TF corresponds to Figure 6(B) of frame TF, and illustrates the fluidic connections between the central opening CentOp and the main channel formed by through openings In₁. Except for the general shape of the through opening, circular for In₁ and elongated for Out₁, the structures of the fluidic and sealant features are the same for In₁ and Out₁.

The fluid connection are formed by embedded channels EmbCh. Grooves Gr_{bot1} are formed on the bottom surface of each thin frame so as to surround the through openings In₁. These grooves are to receive o-rings (not represented) to ensure sealing of the main channel.

Figure 9 of frame TF corresponds to Figure 6(C) of frame TF' and illustrates the fluidic connections between the central opening CentOp and the main channel formed by the through openings In₂. Except for the general shape of the through opening, circular for In₂ and elongated for Outz, the structures of the fluidic and sealant features are the same for In₂ and Out₂.

The fluid connections are formed by open channels OpCh formed on a bottom surface Bot of a given thin frame TF combined to top channels ToOpCh embedded in protrusions Prot surrounding the through openings In₂ of complementary thin frame TF on which the given thin frame TF is stacked. A protrusion Prot protrudes over a height h towards the Z direction from a top surface Top of the complementary thin Frame TF. The given thin frame and the complementary thin frame are identical and the terms "given" and "complementary" are merely here to designate two distinct thin frames having a same structure and combined with one another. The channels ToOpCh are embedded channel that extend in a plane perpendicular to the Z direction, through the protrusion Prot, from the through opening In₂ towards the central opening CentOp.

A channel is considered as embedded when, except for at least one inlet and one outlet, it is entirely and continuously surrounded by material. Otherwise stated, a cross-section of an embedded channel shows an opening (the section of the channel itself) that is entirely and continuously surrounded by material. In contrast, except for at least one inlet and one outlet, an open channel is not surrounded by material on one of its sides.

A given thin frame has a recess Rec to receive the protrusion of a complementary thin frame on which the given thin frame is stacked. The recess extends over a depth d in the thickness of the thin frame TF, considered from the bottom surface Bot of the thin frame. The depth d is preferably close or equal to the height h. The shape and the dimensions of the recess of a given frame are configured so that the protrusion of a complementary, thin frame can be inserted therein. The given thin frame and the complementary thin frame are preferably two reproductions of the same thin frame TF, so that they have a same geometry.

When two thin frames TF are stacked in the Z direction so that the protrusion of the one at the bottom is inserted into the recess of the one at the top, the open channel of the one at the top is (i) closed in the Z direction by the top surface Top of the one on the bottom and (ii) fluidically connected to the through opening In₂ via the channel ToOpCh of the one at the bottom. Also, the top channel of the frame at the bottom are preferably aligned with the open channel of the frame at the top.

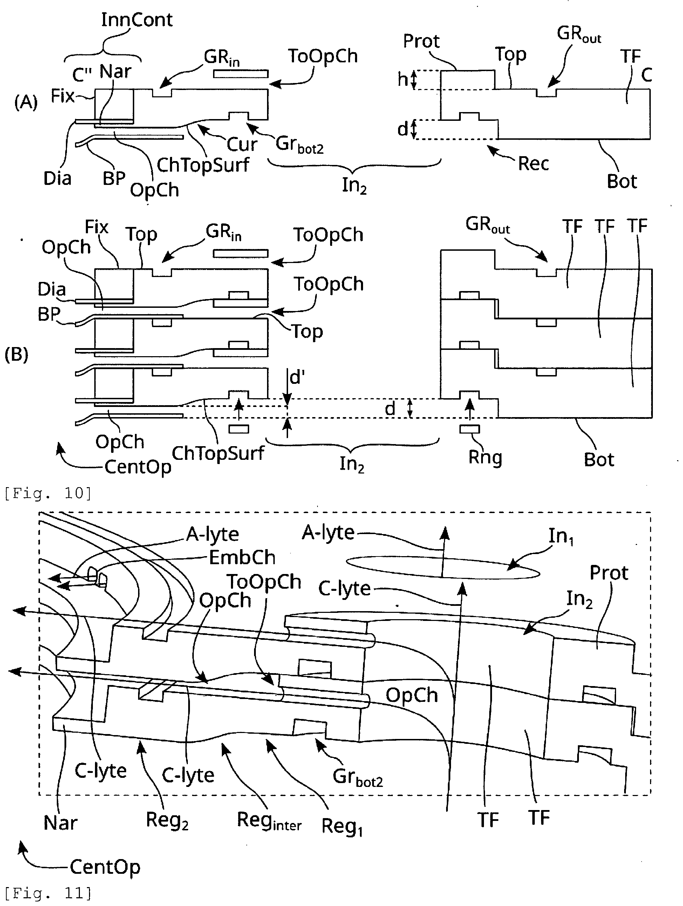

Figure 10 illustrates such a stack, with a cross section view in perspective of a stack of two thin frame TF. As illustrated by Figure 10, the fluidic connection from the through opening to the central opening comprises, in this order: the through opening In₂, the top channel ToOpCh, the open channel OpCh and finally the central opening CentOp. The top channel ToOpCh is configured to lead fluids from the through opening In₂ to the open channel OpCh. The designation "open channel" has to be understood when an isolated thin frame TF is considered: in contrast to embedded channels EmbCh, the open channels OpCh are open in the sense that a cross section of the channel would show that it is not surrounded on all of its periphery by material. In the representation of this document, open channels of an isolated thin frame are open on their bottom side.

In addition, a groove Gr_{bot2} can be formed in the recess Rec of the bottom side of a given thin frame, so as to surround the mouth of the opening In₂. This groove has for function to receive an optional sealing element Rng (illustrated in Figure 9(B)) such as an o-ring to be pressed against a top surface of the protrusion Prot of a complementary thin frame on which the given thin frame is stacked. Thereby, the sealing of the through opening In₂ is ensured without risking an obstruction of the open channel by a sealing element.

The structure described with the help of Figures 7 to 9 is advantageous in that it allows to distribute channels in the thickness of a thin frame while (i) ensuring a proper sealing of the through opening and (ii) without adding thickness to the thin frame since the thickness of the protrusion Prot is absorbed by the depth of the recess Rec.

The stacks of frames illustrated in Figures 6 to 10 can form the stack Stck of the electrolyzer 100 in Figure 1.

Other features of the thin frame TF and of a stack integrating a plurality of thin frames stacked on top of each other are described below.

The open channels can optionally have two depths d and d' measured from the bottom surface Bot, as in the example illustrated by the figures. The depth d of a first region Reg₁ of the open channels corresponds to the depth of the recess Rec and is found on the side of the through opening In₂. The depth d' of a second region Reg₂ of the open channels is the depth of the open channel on the side of the central opening CentOp. Preferably, the first and the second regions are linked by an intermediary region Regᵢₙₜₑᵣ having a depth continuously varying between d and d'. A surface ChTopSurf forms the top surface of the open channel, that is open on its bottom side. The surface ChTopSurf presents a curved shape Cur in the intermediary region of the channel, visible in a cross-section of the open channel defined by the vertical direction Z and a radial direction parallel to an extension direction of the channel and to the flow of fluid when the thin frame is in function. The curved shape modulates the depth of the open channel in the intermediary portion. The curved shape Cur, comprising a concave portion connected to the first region and a convex portion connected to the second region, facilitates the flow of fluids through the open channels OpCh.

Figures 6 to 9 illustrates bipolar plates having a curved shape. This curved shape allows balancing the volumes of the two half of an electrolytic cell separated by a diaphragm. For example, if the bipolar plates illustrated by Figure 7 where maintained flat in a plane, the distance separating a bipolar plate from a diaphragm attached to the same frame would be smaller than the distance separating the same bipolar plate from the diaphragm of the frame underneath. Curving the bipolar plates (easier to curve than the diaphragms) can compensate for this discrepancy in distances by tending to equalize the volumes of the two half electrolysis cells separated by the bipolar plate.

Figure 11 shows perspective views of a top side and a bottom side, at (A) and (B) respectively, of a thin frame TF at the , location of the through opening Out₂. As already stated, through opening Out₂ and its fluidic and sealant features have the same structure as through opening In₂.

Figure 11(A) shows in particular the mouths of a plurality of top channels ToOpCh emerging from the protrusion Prot of a first thin frame. The top channels ToOpCh are designed to lead to the open channel OpCh of a second thin frame stacked on the first thin frame. As illustrated, the top channels of a thin frame overlap the open channels of the same thin frame. Figure 11(A) also shows the surface S1 of the part Nar that narrows the central opening. The surface S1 is designed to receive a diaphragm Dia as illustrated by Figures 7 to 9.

Figure 11(B) shows the structure of the open channel OpCh and a groove Gr_{bot2} formed in the recess Rec of the bottom side thin frame (see also Figure 9), so as to surround the mouth of opening Out. This groove is intended to receive a sealing element to be pressed by the protrusion Prot of another thin frame in a stack of thin frames to ensure sealing of the main channel formed by the succession of through openings Out₂ in a stack of thin frames TF. Figure 11(B) also shows the surface S2 of the part Nar that narrows the central opening. The surface S2 is designed to receive a bipolar plate BP as illustrated by Figures 7 to 9.

Also visible are elongated pillars Pil, that present a shape elongated along a direction of the expected flow, from the central opening side to the through opening. A first portion Sup1 of a pillar has a height d' so s to be level with surface S2 and is configured to maintain a bipolar plate that is maintained by this surface S2 outside of the open channel when the stack of an electrolyzer is formed. A second portion Sup2 of a pillar is configured to support pressure exerted to the frames of the stack to ensure sealing between the elements forming the stack. For that purpose, the portion Sup2 has a surface that is level with the bottom surface Bot of the thin frame. Portions Sup1 and Sup2 of the pillar Pil have for function to prevent collapse of the thin frame in the open channel and maintain it properly open to flow. An advantage of having an elongated shape for the pillar is that the flow is minimally disturbed compared to, for example, circular or square pillars.

The thin frame TF is preferably made from an electrically insulating material such as a polymer, to limit the risk of shorting the electrodes and to maintain the cost low as compared to metal-based frames and rings. In any case, the material used preferably resists to the pressure, temperature and chemical environment of the hydrogen electrolysis process. Therefore, it is preferable that the frame and the ring resist to pressure as high as 120 bars, temperatures up to 120°C, and to alkaline environments, the electrolyte being typically alkaline KOH- or NaOH-based solutions. I

Adequate materials are polyether ether ketone, polysulfones and polyphenylene sulphide. These polymers can comprise glass fiber, for example so as to have glass fiber content comprised between 10% and 40%, preferably between 15% and 25%, by weight. The thin frame TF can be formed in one piece by injection molding and CNC (Computer Numerical Control) milling. The sealing surfaces of the grooves Gr may be finished by polishing. The thin frame is preferably made from one single piece of material, i.e., the thin frame has preferably an integral structure.

In the present example, o-rings are employed as sealing elements to be installed in grooves, but the invention is not limited to this technical solution, and sealing may be ensured by any other means deemed appropriate by the practitioner, such as overmolded sealing or gasket, or direct bonding between elements, for example ultrasonic bonding between two elements made of polymers, such as a bipolar plate formed from a polymer welded to surface S2. Sealing elements can be cumulated as deemed adequate by the practitioner.

Further, the side of the thin frame on which the grooves are formed may be changed. For example, the groove to ensure sealing around through channel Out₂ is, in the example of Figure 11, formed in the recess, on the bottom side of the frame, so that the top side of the protrusion of another frame can be pressed against it. However, the opposite geometry is possible, in which the groove would be formed on the top side of the protrusion.

Although the cell frame taken in example is presenting a circular shape, this does form a limitation and a cell frame according to the invention may present any practicable shape, such as a square or rectangular shape.

Also the principle of the invention may be exploited for any type of electrolysis, such as pressurized or atmospheric electrolysis, which requires to stack electrolytic cells. Each of the features mentioned in this document can be freely combined within technical limits understood by the practitioner in the field of the invention.

Other variations to the disclosed examples can be understood and effected by those skilled in the art in practicing the claimed invention, from a study of the drawings, the disclosure, and the appended claims.

## Claims

1. A frame (TF) configured to be integrated in a stack of frames of an electrolyzer, the frame comprising a central opening (CentOp), a first through opening (In₂, Outz), a top surface (Top) and a bottom surface (Bot) opposed to the top surface (Top), the frame further comprising:
- a protrusion (Prot) protruding from the top surface (Top) and surrounding the first through opening (In2, Out2);
- a recess (Rec) formed in the bottom surface (Bot);
- a top channel (ToOpCh) extending through the protrusion (Prot) from the first through opening (In₂, Out₂) towards the central opening (CentOp);
- an open channel (OpCh) formed underneath the top embedded channels (ToOpCh) on the bottom surface (Bot),
wherein the frame (TF) is configured so that a first reproduction of the frame can be stacked onto a second reproduction of the frame, the recess (Rec) of the reproduction at the top receiving the protrusion (Prot) of the reproduction at the bottom so that the first through opening is fluidically connected to the central opening (CentOp) through the top channel (ToOpCh) of the reproduction at the bottom and the open channel (OpCh) of the reproduction at the top.

2. The frame (TF) according to claim 1, configured so that, when the first reproduction is stacked onto the second reproduction, the top channel (ToOpCh) of the reproduction at the bottom is aligned with the open channel (OpCh) of the reproduction at the top.

3. The frame (TF) according to claim 1 or 2, configured so that, when the first reproduction is stacked onto the second reproduction, a sealing element (Rng) surrounding the first through opening (In₂, Outz) is located in the recess of the first reproduction.

4. The frame (TF) according to claim 3, wherein a groove (Gr_{bot2}) apt at receiving the sealing element (Rng) is formed in the recess (Rec).

5. The frame (TF) according to any one of claims 1 to 4, the open channel (OpCh) having a first depth (d) in a first region (Reg₁) of the open channel at a side of the first through opening (In₂, out₂) and a second depth (d') in a second region (Reg₂) of the open channel at a side of the central opening (CentOp).

6. The frame (TF) according to claim 5, the open channel (OpCh) comprising an intermediary region (Regᵢₙₜₑᵣ) linking the first region (Reg₁) to the second region (Reg₂), the intermediary region (Regᵢₙₜₑᵣ) having a depth varying continuously between the first depth (d) and the second depth (d').

7. The frame (TF) according to claim 6, the intermediary region presents a curved shape (Cur) modulating the depth of the open channel and comprising a concave portion connected to the first region (Reg₁) and a convex portion connected to the second region (Reg₂).

8. The frame (TF) according to any one of claims 1 to 7, the open channel (OpCh) comprising an elongated pillar (Pil) having a shape elongated along a direction of an expected flow in the open channel (OpCh).

9. The frame (TF) according to any one of claims 1 to 8, further comprising a second through opening (In₁, Out₁) and an embedded channel (EmbCh) connecting the second through opening (In₁, Out₂) to the central opening (CentOp).

10. The frame (TF) according to any one of claims 1 to 9, the frame being formed from one single piece of material.

11. A stack (Stck) of reproductions of the frame (TF) according to any one of claims 1 to 10, the stack comprising at least a first reproduction of the frame stacked on a second reproduction of the frame, a diaphragm (Dia), a bipolar plate (BP), a cathode (Ca), and an anode (An).

12. The stack (Stck) according to claim 11, wherein the frame comprise a narrowing part (Nar) having a top surface (S1) and a bottom surface (S2) each receiving one of the bipolar plate (BP) and the diaphragm (Dia).

13. The stack (Stck) according to claim 11 or claim 12, wherein the bipolar plates are curved so as to compensate for a discrepancy between a first distance separating a bipolar plate and a diaphragm each attached to the first reproduction and a second distance separating the bipolar plate of the first reproduction and a diaphragm from the second reproduction.

14. An electrolyzer (100) comprising the stack according to any one of claims 11 to 13, configured to circulate one of an anolyte (A-lyte) and a catholyte (C-lyte) through an inlet (MC_{2-In}) of a first main channel formed by first through openings (Inz) of the first reproduction of the frame and to circulate the other one of the anolyte (A-lyte) and the catholyte (C-lyte) through an inlet (MC_{1-In}) of a second main channel formed by second through opening (In₁) of the second reproduction of the frame.
